# EUROPÄISCHE PATENTANMELDUNG

(11) **EP 0 842 598 A2**
(43) Veröffentlichungstag der Anmeldung: **20.05.1998**
(21) Anmeldenummer: 97203542.2
(22) Anmeldetag: 14.11.1997
(51) Int. Cl.: A01G 9/00

(54) **Schnittblumen Befluttungsvorrichtung**

(30) Priorität: 18.11.1996 NL 1004555
(71) Anmelder: Theelen, J.M.H.A., 6598 AA Heyen (NL)
(72) Erfinder: Theelen, J.M.H.A., 6598 AA Heyen (NL)

(57) **Zusammenfassung**

Die Erfindung hat Bezug auf eine Arbeitsweise für das berieseln von Pflanzen und Blumen, insbesondere von Schnittblumen, die in einen Berieselungsraum platziert sind. Die Erfindung wird gekennzeichnet durch einen Zyklus von das aushebern von eine Quantität Berieselungswasser aus den Berieselungsraum zu den Ausfschlagsraum, das aushebern von Berieselungswasser aus den Aufschlagsraum zu den Säuberungsraum, das säubern von Berieselungswasser in den Säuberungsraum und das aushebern von gesäubertes Berieselungswasser in den Berieselungsraum. Die Erfindung hat zugleich Bezug auf eine Einrichtung für das ausführen von die Arbeitsweise gemäss der Erfindung.

## Beschreibung

Die Erfindung hat Bezug auf eine Arbeitsweise für das berieseln von Pflanzen und Blumen, insbesondere Schnittblumen, welche in eine Berieselungsanlage gestellt sind. Ebenfalls hat die Erfindung Bezug auf eine Einrichtung für das anwenden von die Arbeitsweise gemäss der Erfindung.

Solche Arbeitsweise und Einrichtung ist allgemein bekannt und wird insbesondere verwendet in Kunstgärtnerein, Gärtnereien und derartigen. Bei die bekannte Einrichtung sind zum Beispiel ein große Menge für Verkauf bestimmte Schnittblumen in einen Vorstellungsraum, wie einen Laden, aufgestellt.

Dazu sind die Schnittblumen meistens in Vorstellungs- oder Berieselungskasten gestellt wo die durch das Personal von Berieselungswasser, wohl oder nicht mit einen Übermaß an Nährmittel, versehen werden. Häufig steht das Berieselungswasser längere Zeit in den Berieselungskasten, wodurch das Berieselungswasser durch die Entwicklung von, für die Schnittblumen schädliche Bakterienkulturen und andere Verunreinigungen von auswärts verschmutzt wird.

Der Blüte, die Haltbarkeit, sowie auch die Vorstellung von die Schnittblumen hierdurch nachteilig beeinflusst werden.
Das verunreinigte Berieselungswasser wird ganz ersetzt, wodurch, nächst einem nachteilig hohes Wasserverbrauch, die anwesende Verunreinigungen und den Übermaß an Nahrungsmittel die Umwelt unnötig belasten. Die Erfindung beabsichtigt obengenannte Beschwerden abzufangen und eine schlichte und billigere Arbeitsweise, sowie auch eine Einrichtung zu verschaffen die das Wasserverbracuh ansehnlich verringert, das Wasser gescheiden von die Schnittblumen säubert und die Zufügung von Nährmittel regelt, wodurch die Abfallströmen und die Belastung des Umwelts ansehnlich verringert und der Blüte, die Haltbarkeit, sowie auch die Vorstellung von die Schnittblumen positiv beeinflüsst.

Die Arbeitsweise wird übereinstimmend der Erfindung gekennzeichnet durch den Zyklus von das aushebern von eine Quantität Berieselungswasser aus dem Berieselungsraum nach einen Aufschlagsraum, das aushebern von Berieselungswasser aus dem Berieselungsraum nach den Säuberungsraum, das säubern von Berieselungswasser in den Säuberungsraum und das aushebern von gesäubertes Berieselungswasser nach dem Berieselungsraum.

Durch das Berieselungswasser neu zu gebrauchen werden das Verbrauch von Berieselungswasser, sowie auch die anwesende Verunreinigungen und die Belastung des Umwelts verringeren. Gleichzeitig wird der Blüte, die Haltbarkeit, sowie auch die Vorstellung von die Schnittblumen hierdurch positiv beeinflüsst.
Zugleich wird die Arbeitsweise übereinstimmend der Erfindung gekennzeichnet, durch das nach das aushebern von Berieselungswasser aus den Berieselungsraum zu den Aufschlagsraum, gesäubertes Wasser aus den Säuberungsraum nach den Berieselungsraum wird ausgehebert.

Auf diese Weise werden die Schnittblumen eher und öfter von frischem Berieselungswasser versehen, wodurch die Haltbarkeit und die Vorstellung der Schnittblumen verbessern.

Ebenfalls wird durch den ersten Ersatz des Berieselungswassers die Menge an Verunreinigungen und die Belastung des Umwelts verringern. Laut ein weiteres Kennzeichen von die Arbeitsweise übereinstimmend der Erfindung werden vor, während und nach das aushebern von Berieselungswasser aus den Aufschlagsraum nach den Säuberungsraum Bakterientötende und/oder Bakterienwachsbremsende Mittel an das Berieselungswasser zugefügt.

Hierdurch verunreinigt das Berieselungswasser weniger schnell mit für die Schnittblumen schädliche Bakterienkulturen und werden zugleich die Schnittblumen nicht durch die Bakterientötende und/oder Bakterienwachsbremsende Mittel angegriffen, während zugleich der Blute, die Haltbarkeit, und die Vorstellung von die Schnittblumen verbessert werden.

Dementsprechend wird die Quantität der Verunreinigungen und die Belastung des Umwelts verringern.

Gleichzeitig kann das Berieselungswasser erwärmt werden oder mittels Elektromagnetische Strahlung, sowie ultraviolette Strahlung, bestrahlt werden, wodurch die Bakterienkulturen durch die Wärme oder die Strahlung unschädlich gemacht werden. Weiterhin kann das Berieselungswasser durch mindestens ein Mikrofilter gefiltert werden, damit die Bakterienkulturen in das Mikrofilter zurückbleiben.

Zugleich kann die Arbeitsweise dazu gekennzeichnet sein, das während einen Zyklus die Menge an Berieselungswasser auf einen bestimmten Wert wird reguliert. Auf diese Weise werden die Schnittblumen von die richtige Menge Berieselungswasser versehen, damit der Blüte, die Haltbarkeit, und die Vorstellung von die Schnittblumen verbessern. Zugleich werden gemäss die Erfindung vor, während oder nach das aushebern des Berieselungswassers aus dem Säuberungsraum zu den Bereiselungsraum, Nährmittel an das Berieselungswasser zugefügt. Diese Zufügung kann hierdurch dosiert anstatt in Übermaß passieren, damit der Blüte, die Haltbarkeit, und die Vorstellung von die Schnittblumen verbessern.

Laut ein weiteres Kennzeichen von die Arbeitsweise wird während oder nach das aushebern von Berieselungswasser aus den Berieselungsraum zu den Aufschlagsraum, das Berieselungswasser gefiltert. Hierdurch werden die Verunreinigungen aus das Berieselungswasser entfernt und werden der Blüte, die Haltbarkeit, und die Vorstellung von die Schnittblumen verbessern.
Laut ein weiteres Kennzeichen von die Erfindung wird die Arbeitsweise dadurch gekennzeichnet das, das Berieselungswasser in den Berieselungsraum oder in eine Leitung zwischen den Säuberungsraum und den Berieselungsraum gekühlt wird. Die Kühlung des Berieselungswasser in den Berieselungsraum oder in eine Leitung zwischen den Säuberungsraum und den Berieselungsraum, verbessert der Blüte, die Haltbarkeit, und die Vorstellung von die Schnittblumen.

Bei Vorzug dauert einen Zyklus so lange wie die Bakterientötende und/oder Bakterienwachsbremsende Mittel in den Säuberungsraum ausgewirkt sind oder nahezu keinen Schaden mehr an die Schnittblumen zufügen werden, zum Beispiel 12 Stunden.

Hierdurch wird nur gesäubertes Berieselungswasser zu den Berieselungsraum ausgehebert, damit der Blüte, die Haltbarkeit, und die Vorstellung von die Schnittblumen stark verbessern wird. Gleichzeitig werden die Schnittblumen nicht durch die Bakterientötende und/oder Bakterienwachsbremsende Mittel angetastet.

Die Einrichtung für das ausführen von die Arbeitsweise übereinstimmend der Erfindung wird dazu gekennzeichnet, dadurch das die Einrichtung einen herumgehende Rundstrecke umfasst, enthalltend einen Berieselungsraum, die durch mindestens eine Leitung mit einen Aufschlagsraum verbunden ist, welcher Aufschlagsraum durch mindestens eine zweite Leitung mit einen Säuberungsraum verbunden ist, und welche mittels mindestens eine dritte Leitung mit den Berieselungsraum verbunden ist.

Durch die Ausführung der Einrichtung gemäss der Erfindung wird den Verbrauch von Berieselungswasser, die Quantität Verunreinigungen, sowie auch die Belastung des Umwelts stark verringern. Hierdurch wird die Haltbarkeit, der Blüte und die Vorstellung von die Schnittblumen verbessern. Durch ein anderes Kennzeichen der Erfindung is in die Rundstrecke mindestens eine Klappe angebracht. Hierdurch wird vorgebeugt das, das verunreinigte Berieselungswasser in Kontakt kommt mit den frischen, gesäubertem Berieselungswasser.

Bei Vorzug umfasst die Einrichtung gemäss der Erfindung eine Pumpe, die mindestes in die erste und/oder in die dritte Leitung ist angebracht. Auf diese Weise wird das Bereiselungswasser auf eine zweckmäßige Weise aus und zu die verschiedene Räume ausgehebert. Laut der Erfindung wird die Einrichtung dadurch gekennzeichnet, das den Aufschlagsraum und/oder die erste Leitung versehen ist von ein Filter. Das Filter entfernt die Verunreinigungen aus das Berieselungswasser, wodurch der Blüte, die Haltbarkeit, und die Vorstellung von die Schnittblumen verbessert werden und die Belastung des Umwelts verringert wird. Eventuell kann die Einrichtung in die zweite Leitung und/oder den Säuberungsraum versehen werden von einen Mikrofilter für die Entfernung von Bakterienkulturen.

Laut ein anderes Kennzeichnen von der Erfindung wird die Einrichtung davon gekennzeichnet, das den Säuberungsraum mindestens eine Zufuhranschluß hat behufs Zufuhr von Bakterientötende und/oder Bakterienwachsbremsende Mittel. Auf diese Weise werden die in das Berieselungswasser anwesende Bakterienkulturen getötet und/oder in Anzahl verringert wodurch der Blüte, die Haltbarkeit, und die Vorstellung von die Schnittblumen verbessern.

Daneben wird die Einrichtung gemäss der Erfindung gekennzeichnet, dadurch daß den Säuberungsraum und/oder die dritte Leitung und/oder den Berieselungsraum eine Zufuhrleitung umfass behufs die Zufuhr von Nährmittel. Hierdurch kann die Quantität Nährmittel für die Schnittblumen genau geregelt werden, wo durch die Belastung des Umwelts stark verringert. Darauf ist die Rundstrecke versehen von Mittel für das regelen von die Menge Berieselungswasser in den Berieselungsraum. Auf diese Weise wird den Verbrauch von Berieselungswasser besser beherrscht.

Daneben wird die Einrichtung übereinstimmend der Erfindung gekennzeichnet, dadurch daß den Berieselungsraum und/oder die dritte Leitung versehen ist von ein Kühlelement. Das kühlen von das Berieselungswasser hat eine günstige Wirkung auf die Haltbarkeit der Schnittblumen, wo durch die Vorstellung verbessert wird. Daneben kann die Einrichtung übereinstimmend der Erfindung ein Regler umfaßen für das austeuern von die respektive Klappen, Pumpen und Kühlelemente sowie auch für das regeln von die Zufuhr von die Bakterientötende und/oder Bakterienwachsbremsende und oder Nährmittel und für das einführen von die Länge des Zyklus. Dadurch wird das Verbrauch von Berieselungswasser, die Entwicklung von Bakterienkulturen, die Quantität Verunreinigungen in das Berieselungswasser besser beherrscht, wo durch der Blüte, die Haltbarkeit, und die Vorstellung von die Schnittblumen verbessern und die Belastung des Umwelts verringert.

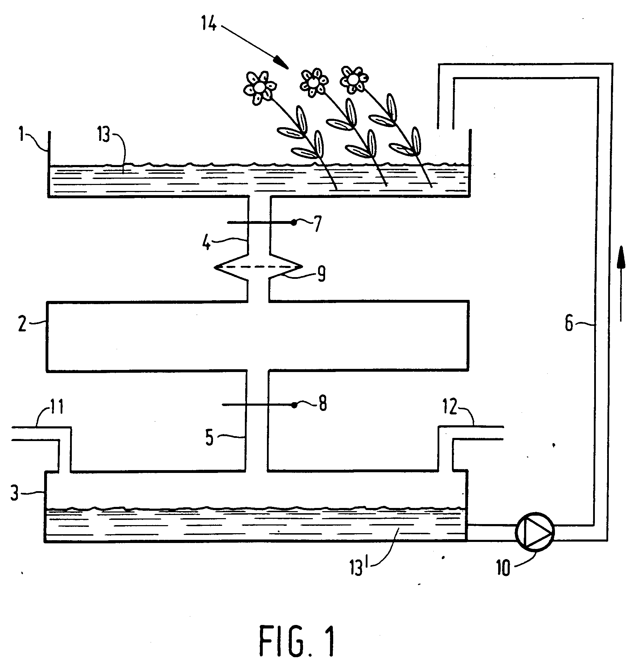

Die Erfindung wird näher erklärt anhand anliegende Zeichnung.
In die Zeichnung zeigt Figur 1, eine Ausführung von eine Einrichtung gemäss der Erfindung in Durchschnitt und Seitenanzicht schematisch wiedergeben;

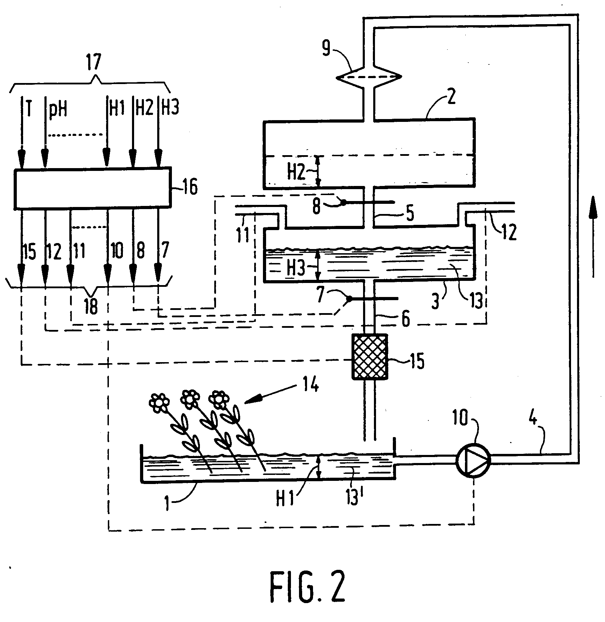

Figur 2, eine zweite Ausführung von die Einrichtung gemäss der Erfindung in Durchschnitt und Seitenanzicht schematisch wiedergeben;

Figur 1 zeigt in Durchschnitt schematisch eine Einrichtung für das ausführen von die Arbeitsweise gemäss der Erfindung. Die Einrichtung besteht aus eine Rundstrecke bestehend aus einen Ausstellungs- oder Berieselungsraum 1, einen Aufschlagsraum 2, ein Säuberungsraum 3, eine Leitung 4, welche zwischen den Bereiselungsraum 1 und den Aufschlagsraum 2 ist vorgenommen, einen Säuberungsraum 3 ist angebracht und eine Leitung 6, welche zwischen den Säuberungsraum 3 und den Berieselungsraum 1 ist angebracht In die Leitungen 4 und 5 sind die Klappen 7 resp. 8 angebracht, während in der Leitung 6 eine Pumpe platziert ist.

In diesen Ausführungsform sind den Aufschlagsraum 2 und den Säuberungsraum 3 gestapelt unter den Berieselungsraum 1 platziert. Die Platzierung der verscheidene Teile hat aber keinen Einfluß auf das richtig funktionieren der Einrichtung. Den Berieselungsraum 1 kann ausgeführt sein als einen offenen Kasten mit Beinen mit einen erhobenen Rand und wird platziert bei Kunstgärtnerein, Gärtnereien und derartigen für die Vorstellung von für Verkauf bestimmte Pflanzen und Blumen, zum Beispiel Schnittblumen 14. Diese Schnittblumen werden in den Berieselungsraum 1 platziert, welche darauf mit eine bestimmte Menge Berieselungswasser 13 gefüllt wird, um die Schnittblumen 14 von Feuchtigkeit und Ernährung zu versehen.

Bei die heutige Berieselungsräume bleibt das Berieselungswasser während längere Zeit (1 oder mehr Wochen) in die Berieselungsräume stehen, wo durch das Wasser nach einige Zeit beschmutzt wird mit auswärtige Verunreinigungen. Gleichzeitig entstehen in das länger stilstehende Wasser Bakterienkulturen, welche schädlich sind für die Schnittblumen die in den Berieselungsraum platziert sind. Die Bakterienkulturen werden durch den Zufuhr von Bakterientötende und/oder Bakterienwachsbremsende Mittel an das Berieselungswasser, in die Berieselungsräume unschädlich gemacht. Diese Mittel sind jedoch auch schädlich für die Schnittblumen.

Das durch die Verunreinigungen und die Bakterienkulturen beschmutzte Berieselungswasser verringert die Blüte und die Haltbarkeit der Schnittblumen und beeinflusst Zugleich nachteilig die Vorstellung der Schnittblumen. Dadurch daß das Berieselungswasser länger in den Berieselungsraum stehen bleibt, wird ebenfalls einen Übermaß an Nährmittel an das Berieselungswasser für die Schnittblumen zugefügt. Wenn nach 1 oder mehr Wochen das verunreinigte Berieselungswasser ersetzt werden muß, wird das Wasser (inkl. Verunreinigungen) durch eine Abfluß abgeführt. Neben einen hohen Wasserverbrauch führt dies durch die Verunreinigungen, die Bakterienkulturen und den Übermaß an Nährmittel ebenfalls zu eine unnötige erhöhte Belastung des Umwelts.

In die Einrichtung gemäss der Erfindung, in Figur 1, wird das Berieselungswasser 13 nicht abgeführt, aber durch die Leitung 4 ausgehebert nach einen Aufschlagsraum 2. Dazu wird die in Leitung 4 angebrachte Klappe geöffnet. Durch den Aufschlagsraum unter den Berieselungsraum 1 zu platzieren fließt das Berieselungswasser 13, beeinflusst durch die Schwerkraft, in den Aufschlagsraum 2. Das aushebern von das Berieselungswasser 13 kann auch mittels eine in die Leitung platzierte Pumpe (nicht gezeigt) ausgeführt werden. In die Leitung 4 ist ein Filter 9 platziert, wo durch das Berieselungswasser während das aushebern gefiltert wird und grobe Verunreinigungen in das Filter zurück bleiben.

In eine andere Ausführung kann das Filter 9 auch in den Aufschlagsraum 2 platziert sein. Nach das aushebern von das Berieselungswasser 13 aus den Berieselungsraum 1 zu den Aufschlagsraum 2 wird die Klappe 7 in die Leitung 4 geschlossen und wird Klappe 8 in die Leitung 5 zwischen den Aufschlagsraum 2 und den Säuberungsraum 3 geöffnet. Beeinflusst durch die Schwerkraft wird das gefilterte Berieselungswasser 13 aus den Aufschlagsraum 2 nach den Säuberungsraum 3 ausgehebert. Das aushebern kann auch mittels eine in Leitung 5 platzierte Pumpe (nicht gezeigt) ausgeführt werden. Nach das aushebern von das Berieselungswasser 13 aus den Aufschlagsraum 2 zu den Säuberungsraum wird das Berieselungswasser 13 weiter gesaubert. Hierzu wird durch eine Zufuhrleitung 11, welche in den Säuberungsraum 3 ausmündet, bestimmte Mengen Bakterientötende und/oder Bakterienwachsbremsende Mittel zugefügt. Diese Bakterientötende und/oder Bakterienwachsbremsende Mittel können willkürliche Mittel sein.

Die Bakterientötende und/oder Bakterienwachsbremsende Mittel wirken auf die in das Berieselungswasser anwesende Bakterienkulturen ein, so daß diese getötet oder in Quantität stark verringert werden. Das einwirken von die Bakterientötende und/oder Bakterienwachsbremsende Mittel auf die in das Berieselungswasser anwesende Bakterien dauert einen bestimmten Zeitabschnitt, während welche Periode das Säuberungswasser 13 in den Ausschlagsraum 3 bleibt. Die Einwirk- oder Säuberungsperiode von die Bakterientötende und/oder Bakterienwachsbremsende Mittel auf die Bakterienkulturen in das Berieselungswasser 13 is unter anderen abhängig von die Quantität Berieselungswasser 13 in den Säuberungsraum 4, die Menge in das Berieselungswasser 13 anwesende Bakterienkulturen, die Art und Gattung der Bakterientötende und/oder Bakterienwachsbremsende Mittel, sowie auch eine Anzahl an andere Faktoren, wie zum Beispiel die Temperatur T und den Säuregrad pH von das Berieselungswasser 13. Die Einwirk- oder Säuberungszeit kann zum Beispiel 8 oder 12 Stunden sein.

Nach die Einwirk- oder Säuberungszeit ist das Berieselungswasser 13 in den Aufschlagsraum 3 gesäubert von, für Schnittblumen schädliche Bakterienkulturen. Das gesäuberte Berieselungswasser kann auf diese Weise neu gebraucht werden für das berieseln von die Schnittblumen 14, welche in den Berieselungsraum 1 platziert sind. Hierzu wird das Berieselungswasser 13 aus den Säuberungsraum 3 durch die Leitung 6 nach den Berieselungsraum 1 ausgehebert. Da den Säuberungsraum 3 in diese Ausführungsform von die Einrichtung gemäss der Erfindung sich auf das niedrigste Punkt befindet, wird das aushebern von Berieselungswasser 13 aus den Säuberungsraum 3 zu den Berieselungsraum 1 mittels eine Pumpe 10 ausgeführt, welche in Leitung 6 platziert ist.

An das gesäuberte Berieselungswasser 13 können Nährmittel zugefügt werden zur Verbesserung der Blüte und die Haltbarkeit von die in den Berieselungsraum 1 platzierte Schnittblumen 14. Diese Nährmittel, zum Beispiel Zucker, können durch eine Zufuhrleitung 12, welche in den Säuberungsraum 3 ausmündet, an das gesauberte Berieselungswasser zugefügt werden.

Die Nährmittel können aber auch vor oder zugleich mit das zuführen von die Bakterientötende und/oder Bakterienwachsbremsende Mittel an das Berieselungswasser 13 in den Säuberungsraum 3 zugefügt werden. Daneben kann auch die Zufuhrleitung 12 auf die Leitung 6 angeschlossen sein, so daß während das aushebern von das gesäuberte Berieselungswasser aus den Säuberungsraum 3 nach den Berieselungsraum 1 Nährmittel an das Berieselungswasser 13 zugefügt werden. Durch die Konstruktion der Einrichtung gemäss der Erfindung ist es auch möglich den Säuberungszyklus in zwei Phasen aus zu führen. Hierzu befindet sich in den Berieselungsraum 1 eine bestimmte Menge Berieselungswasser 13 und in den Säuberungsraum 3 eine bestimmte Menge Berieselungswasser 13'. In das Berieselungswasser 13' in den Säuberungsraum 3 sind, für die Schnittblumen 14 schädliche, Bakterienkulturen anwesend, welche durch Zufügung der Bakterientötende und/oder Bakterienwachsbremsende Mittel durch Zufuhrleitung 11, unschädlich gemacht werden. Nachdem die Bakterienkulturen in das Berieselungswasser 13' unschädlich gemacht sind, ist das Berieselungswasser 13' gesäubert und kann behufs das berieseln von die Schnittblumen 14 nach den Berieselungsraum 1 ausgehebert werden.

Hierzu wird erst das verunreinigte Berieselungswasser 13 unter Einfluß der Schwerkraft oder mittels eine hier nicht gezeigte Pumpe, durch die Leitung 4 und das Filter 9 aus den Berieselungsraum 1 nach den Aufschlagraum 2 ausgehebert. Hierfür wird Klappe 7 in Leitung 4 geöffnet. Nachdem das verunreinigte Berieselungswasser 13 ist ausgehebert nach Aufschlagsraum 2, schließt Klappe 7 und wird das qesäuberte Berieselungswasser 13' aus den Säuberungsraum 3 mittels Pumpe 10 durch die Leitung 6 nach den Berieselungsraum ausgehebert. Hierdurch können an das gesäuberte Berieselungswasser 13 eventuell Nährmittel zugefügt werden.

Darauf wird die Pumpe 10 ausgeschaltet und wird die Klappe 8 in die Leitung 5 geöffnet. Unter Einfluß der Schwerkraft oder mittels eine nicht gezeigte Pumpe wird das gefilterte und mit Bakterienkulturen verunreinigte Berieselungswasser 13 aus den Aufschlagsraum 2 zu den Säuberungsraum ausgehebert.

Durch via die Zufuhrleitung 11 die Bakterientötende und/oder Bakterienwachsbremsende Mittel an das verunreinigte Berieselungswasser 13 zu zufügen, fängt eine neue Säuberungsperiode an von zum Beispiel 12 Stunden.

Es wird klar sein das mit diese Einrichtung gemäss der Erfindung auf eine einfache und zweckmäßige Weise Berieselungswasser, daß für das berieseln von Schnittblumen benützt wird, für wiedergebrauch geeignet gemacht werden kann. Hierdurch wird den Wassergebrauch stark verringert. Weil bei diese Einrichtung kein verunreinigtes Berieselungswasser abgeführt wird, werden gleichzeitig die Abfallströme und die Belastung des Umwelts stark verringern. Die Einrichtung hat zugleich als Vorteil, das es die Berieselungsperiode für die Schnittblumen einkürzt, so daß die Schnittblumen öfter von frischem Berieselungswasser versehen werden. Die für die Schnittblumen schädliche Bakterienkulturen können sich nicht ausgebreitet entwickeln, aber werden zeitweilig in den Säuberungsraum unschädlich gemacht.

Daneben kommen die Schnittblumen nicht in Berührung mit die schädliche Bakterientötende und/oder Bakterienwachsbremsende Mittel, da das Berieselungswasser erst zu den Berieselungsraum ausgehebert wird wenn die Mittel in den Säuberungsraum ausgewirkt sind oder nahezu kein Schäden an die Schnittblumen zufügen werden. Hierdurch ist es nicht notwendig um die Nährmittel in Übermaß an das Berieselungswasser zu zufügen, aber kann diesen Zufuhr dosiert ausgeführt werden. Dies verringert die Abfallströmen und auf diese Weise ansehnlich die belastung des Umwelts, während zugleich den Blüte, die Haltbarkeit und auch die Vorstellung der Schnittblumen verbessert werden.

Figur 2 zeigt einen anderen Ausführungsform von die Einrichtung für das ausführen von die Arbeitsweise gemäss der Erfindung, welche übereinstimmt mit dieselbe Teile von den Ausführungsform von die Einrichtung in Figur 1, und sind mit dieselbe Referenzdaten angedeutet. In diese Ausführungsform sind den Aufschlagsraum 2 und den Säuberungsraum 3 nicht unter aber gestapelt neben und oben den Berieselungsraum 1 angebracht.

In diesen Ausführungsform ist die Pumpe 10 nicht in die Leitung 6 zwischen den Säuberungsraum 3 und den Berieselungsraum 1 platziert aber ist die Pumpe 10 in die Leitung 4 zwischen den Berieselungsraum 1 und den Aufschlagsraum 2 angebracht und ist in die Leitung 6 zwischen den Säuberungsraum 3 und den Berieselungsraum 1 eine Klappe 7 angebracht.

Übereinstimmend der Erfindung wird verunreinigtes Berieselungswasser 13 mittels Pumpe 10 via die Leitung 4 nach den Aufschlagsraum 2 ausgehebert. Dazu wird das Berieselungswasser 13 durch das Filter 9 gefiltert. Darauf wird die Klappe 7 in die Leitung 6 geöffnet und wird schon gesäubertes Berieselungswasser 13', woran Nahrungsmittel für den Blüten der Schnittblumen 14 sind zugefügt, aus den Säuberungsraum 3 nach den Berieselungsraum 1 ausgehebert. Das aushebern kann unter Einfluß der Schwerkraft stattfinden, aber kann auch mittels eine in Leitung 6 platzierte, nicht gezeigte Pumpe ausgeführt werden.

Nach das aushebern von das gesäuberte Berieselungswasser 13 aus den Säuberungsraum 3 zu den Berieselungsraum 1, wird die Klappe 7 geschlossen und wird die Klappe 8 in Leitung 5 geöffnet.

Das verunreinigte Berieselungswasser 13 wird durch Einfluß der Schwerkraft oder mittels eine nicht gezeigte Pumpe in Leitung 5, aus den Aufschlagsraum 2 zu den Säuberungsraum 3 ausgehebert. Durch aus die Zufuhrleitung 11 Bakterientötende und/oder Bakterienwachsbremsende Mittel an das Berieselungswasser 13 zu zufügen fängt die Säuberungsperiode des Berieselungswasser 13 an. Diese Säuberungsperiode ist abhängig von unter anderem die Menge an Berieselungswasser 13, die Quantität der anwesende Bakterienkulturen in das Berieselungswasser 13, die Art und Gattung der Bakterientötende und/oder Bakterienwachsbremsende Mittel, sowie auch eine Anzahl andere Faktoren, wie die Temperatur T und den Säuregrad pH von das Berieselungswasser 13 und kann zum Beispiel 12 Stunden sein.
Nachdem die Bakterienkulturen in den Berieselungsraum 13 durch die Bakterientötende und/oder Bakterienwachsbremsende Mittel unschädlich gemacht sind oder nahezu unschädlich gemacht sind, werden durch eine Zufuhrleitung 12 Nährmittel, zum Beispiel Zucker an das Berieselungswasser 13 zugefügt.

Die Zufügung von die Nahrungsmittel an das Berieselungswasser 13 kann auf einem willkürlichen Augenblick während die Säuberungsperiode an das Berieselungswasser 13 zugefügt werden, zum Beispiel vor, gleichzeitig oder nach den Zufuhr von die Bakterientötende und/oder Bakterienwachsbremsende Mittel oder am Ende der Säuberungsperiode. Darauf kann den Zyklus von das aushebern, säubern und wiedergebrauch von Berieselungswasser aufs neue anfangen.

Das in den Berieselungsraum 1 anwesende verunreinigte Berieselungswasser 13' wird mittels Pumpe 10 via die Leitung 4 zu den Aufschlagsraum 2 ausgehebert. Darauf wird Klappe 7 in Leitung 6 geöffnet und wird das gesäuberte Berieselungswasser 13 durch die Leitung 6 aus den Säuberungsraum 3 zu den Berieselungsraum 1 ausgehebert. Während das aushebern wird das gesäuberte Berieselungswasser entlang eine oder in die Leitung 6 angebrachten Kühlelement 15 geleitet, so daß das Berieselungswasser 13 mit eine niedrige Temperatur in den Berieselungsraum 1 kommt. Die niedrigere Temperatur von das Berieselungswasser 13 hat einen günstigen Einfluß auf die Haltbarkeit der Schnittblumen 14, wodurch die Vorstellung der Schnittblumen stark verbessert wird.

Gleichzeitig hat die niedrigere Temperatur von das Berieselungswasser 13 eine verzögerte Wirkung auf die Entwicklung von, für die Schnittblumen 14 schädliche Bakterienkulturen. In diesen Ausführungsform ist das Kühlelement 15 rundum oder in die Leitung 6 angebracht, es kan aber auch in den Berieselungsraum 1 platziert werden für das kühlen des Berieselungswassers. Zugleich ist die Einrichtung gemäss der Erfindung versehen von einen Regler 16, welche zum Beispiel einen Komputer oder einen PLC sein kann. Der Regler 16 ist versehen von eine Anzahl an Eingängen 17 und eine Anzahl an Ausgänge 18. Die Eingänge 17 sind verbunden mit eine Anzahl (nicht gezeigte) Sensoren, die Signale an den Regler 16 abgeben. Die Signale können Bezug haben auf eine Anzahl Parameter, wie zum Beispiel die Wasserhöhe in den Berieselungsraum 1 (H1) und/oder den Aufschlagsraum (H2) und/oder den Säuberungsraum 3 (H3), die Temperatur T von das Berieselungswasser sowie auch den Säuregrad pH von das Berieselungswasser in den Säuberungsraum 3.

Als Reaktion auf die durch die Eingänge 17 eingeführte Signale von die verscheidene (nicht gezeigte) Sensoren, steuert den Regler 16 via die Ausgänge 18 Signale zu den Klappen 7 und 8, die Pumpe 10 und das Kühlelement 15, für das im richtigen Augenblick öffnen und schließen von die resp. Klappen 7 und 8, das ansteuern der Pumpe 10, und das ansteuern von das Kühlelement 15. Zugleich regelt der Regler die Zufuhr von die Bakterientötende und/oder Bakterienwachsbremsende Mittel und die Nährmittel durch die Zufuhrleitungen 11 resp. 12. Gleichzeitig kann den Regler 16 auf eine einfache Weise den Berieselungs- c.q. Säuberungszyklus auf eine gewünschte Zeitsdauer einstellen. Hierdurch bekommt man eine Einrichtung, die kontinuierlich, automatisch und selbstregelend funktioniert und wobei den Wasserverbrauch abnimmt, während die Abfallströme und die Belastung des Umwelts stark verringern und zugleich die Haltbarkeit, der Blüte und die Vorstellung der Schnittblumen ansehnlich verbessern.

Es wir klar sein, daß die Erfindung sich nicht beschränkt bis auf die gezeigte Ausführungsformen und daß es innerhalb den Rahmen der Erfindung viele Varianten und Kombinationen von Varianten gibt, die geachtet werden innerhalb der Erfindungsgedanke zu fallen. So können abhängig von unter anderem das Typ Schnittblumen neben einander mehrere Berieselungsräume benutzt werden, welche durch verschiedene Leitungen und Klappen zugleicherzeit als auch einzeln durch den Regler gefüllt und ausgeleert werden. Gleichzeitig können mehrere Säuberungsräume verwendet werden, welche jede verschieden und unabhängig von einander durch den Regler angesteuert werden. Hierdurch ist es möglich um abhängig von das Typ Schnittblume die Berieselungs- c.q. Säuberungsperiode von den Zyklus einzustellen. Zugleich kann die Einrichtung gemäss der Erfindung auf eine willkürlichen Platz versehen werden von eine Zufuhrleitung für das auf Niveau bringen von der Quantität Berieselungswasser. Das entfernen von die Bakterienkulturen aus das Berieselungswasser kann auch mittels ein Mikrofilter passieren. Gleichzeitig kann die Arbeitsweise und Einrichtung auf Pflanzen und Blumen, welche zum Beispiel in einen Topf stehen, benutzt werden.

## Patentansprüche

1. Arbeitsweise für das berieseln von Pflanzen und Blumen, insbesondere von Schnittblumen, welche in einen Berieselungsraum platziert sind, gekennzeichnet durch den Zyklus des aushebern von eine Quantität an Berieselungswasser aus den Berieselungsraum zu einen Aufschlagsraum, das aushebern von Berieselungswasser aus den Aufschlagsraum zu den Säuberungsraum, das säubern von Berieselungswasser in den Säuberungsraum und, das aushebern von gesäubertes Berieselungswasser zu den Berieselungsraum.

2. Arbeitsweise gemäss Folgerung 1, mit das Kennzeichen, daß nach das aushebern des Berieselungswassers aus den Berieselungsraum zu den Aufschlagsraum gesäubertes Wasser von den Säuberungsraum zu den Berieselungsraum ausgehebert wird.

3. Arbeitsweise gemäss Folgerung 1 und 2, mit das Kennzeichen, daß vor, während und nach das aushebern von Berieselungswasser aus den Aufschlagsraum zu den Säuberungsraum Bakterientötende und/oder Bakterienwachsbremsende Mittel an das Berieselungswasser zugefügt werden.

4. Arbeitsweise gemäss Folgerung 1 und 2, mit das Kennzeichen, daß vor, während und nach das aushebern von Berieselungswasser aus den Aufschlagsraum zu den Säuberungsraum das Berieselungswasser erwärmt wird.

5. Arbeitsweise gemäss Folgerung 1 und 2, mit das Kennzeichen, daß vor, während und nach das aushebern von Berieselungswasser aus den Aufschlagsraum zu den Säuberungsraum das Berieselungswasser mit Elektro-magnetische Strahlung bestrahlt wird, zum Beispiel ultraviolette Strahlung.

6. Arbeitsweise gemäss Folgerung 1 und 2, mit das Kennzeichen, daß vor, während und nach das aushebern von Berieselungswasser aus den Aufschlagsraum zu den Säuberungsraum das Berieselungswasser durch mindestens ein Mikrofilter gefiltert wird.

7. Arbeitsweise gemäss einer der obenstehende Folgerungen, mit das Kennzeichen, daß während ein Zyklus die Quantität Berieselungswasser auf einen bestimmten Wert geregelt wird.

8. Arbeitsweise gemäss einer der obenstehende Folgerungen, mit das Kennzeichen, daß während oder nach das aushebern von Berieselungswasser aus den Säuberungsraum zu den Berieselungsraum Nährmittel an das Berieselungswasser zugefügt werden.

9. Arbeitsweise gemäss einer der obenstehende Folgerungen, mit das Kennzeichen, daß während oder nach das aushebern von Berieselungswasser aus den Berieselungsraum zu den Aufschlagsraum das Berieselungswasser gefiltert wird.

10. Arbeitsweise gemäss einer der obenstehende Folgerungen, mit das Kennzeichen, daß das Berieselungswasser in den Berieselungsraum oder in eine Leitung zwischen den Säuberungsraum und den Berieselungsraum gekühlt wird.

11. Arbeitsweise gemäss einer der obenstehende Folgerungen, mit das Kennzeichen, daß ein Zyklus so lange dauert, daß die zugefügte Bakterientötende und/oder Bakterienwachsbremsende Mittel in den Säuberungsraum ausgewirkt sind oder nahezu keinen Schaden an die Schnittblumen zufügen, zum Beispiel 12 Stunden.

12. Einrichtung für das ausführen von die Arbeitsweise gemäss einer der Folgerungen 1 bis einschließlich 11, mit das Kennzeichen, das die Einrichtung eine Rundstrecke umfasst, bestehend aus einen Berieselungsraum, die via mindestens eine erste Leitung mit einen Aufschlagsraum verbunden ist, welcher Aufschlagsraum via mindestens eine zweite Leitung mit einen Säuberungsraum verbunden ist, welchen Säuberungsraum via mindestens eine dritte Leitung mit den Berieselungsraum verbunden ist.

13. Einrichtung gemäss Folgerung 12, mit das Kennzeichen, daß in jede Leitung eine Klappe ist angebracht.

14. Einrichtung gemäss der Folgerungen 12 und 13, mit das Kennzeichen, daß mindestens in die erste und/oder dritte Leitung eine Pumpe ist angebracht.

15. Einrichtung gemäss einer der Folgerungen 12 bis einschließlich 14, mit das Kennzeichen, daß den Aufschlagsraum und/oder die erste Leitung von einen Filter versehen ist.

16. Einrichtung gemäss der Folgerungen 12 bis einschließlich 15, mit das Kennzeichen, daß die zweite Leitung und/oder den Säuberungsraum versehen ist von ein Mikrofilter.

17. Einrichtung gemäss einer der Folgerungen 12 bis einschließlich 16, mit das Kennzeichen, daß den Säuberungsraum mindestens eine Zufuhrleitung umfasst behufs die Zufuhr von Bakterientötende und/oder Bakterienwachsbremsende Mittel.

18. Einrichtung gemäss der Folgerungen 12 bis einschließlich 17, mit das Kennzeichen, daß den Säuberungsraum und/oder die dritte Leitung und/oder den Berieselungsraum eine Zufuhrleitung umfasst behufs Zufuhr von Nahrungsmittel.

19. Einrichtung gemäss einer der Folgerungen 12 bis einschließlich 18, mit das Kennzeichen, daß die Rundstrecke versehen ist von Mittel für das regeln von die Quantität an Berieselungswasser in den Berieselungsraum.

20. Einrichtung gemäss einer der Folgerungen 12 bis einschließlich 19, mit das Kennzeichen, daß den Berieselungsraum und/oder die dritte Leitung versehen ist von mindestens ein Kühlelement.

21. Einrichtung gemäss einer der Folgerungen 12 bis einschließlich 20, mit das Kennzeichen, daß die Einrichtung einen Regler umfasst für das ansteuern von resp. die Klappen, Pumpen und Kühlelementen sowie auch für das regeln von die Zufuhr von Bakterientötende und/oder Bakterienwachsbremsende Mittel und/oder Nährmittel und für das einstellen der Länge des Zyklus.
